# EUROPEAN PATENT APPLICATION

(11) **EP 1 310 886 A1**
(43) Date of publication of application: **14.05.2003**
(21) Application number: 01204326.1
(22) Date of filing: 13.11.2001
(51) Int. Cl.: G06F 17/60

(54) **System and method for booking work assignments**

(71) Applicant: Koninklijke KPN N.V., 9726 AE Groningen (NL)
(72) Inventor: De Jong, Marc Roger, 8532 BG Lemmer (NL); Stavleu, Johannes Mrinus, 2401 HM Alphen aan de Rijn (NL); Van Der Reep, Franciscus Augustinus Maria, 3055 CJ Rotterdam (NL)
(74) Representative: Prins, Adrianus Willem

(57) **Abstract**

A system and method is provided for booking work for allocating work assignments to a worker.
In known systems and methods work assignments are scheduled for the workers automatically. Workers cannot pick work assignments themselves.
According an aspect of the invention workers may via a worker interface select work assignments using a search engine from a work assignments pool that are free or are already booked by themselves and book and schedule them into their own schedule.
Further embodiments are described wherein the selection of work assignments is improved by providing means to select according to a worker profile, e.g. geographical region or skill level.

## Description

### Field of the invention

The present invention relates to the field of software development for supporting business functions.

### Background of the invention

Service oriented organisations having work assignments must assign these work assignments to workers who may work in the same or in different locations. Work assignments can include service or maintenance jobs for energy or telecom companies, medical treatment in hospitals or health care centres, interviews with clients in social care, and similar environments and other areas of industry, consultancy or care.
From the state of the art it is known that there are systems which allocate work assignments to workers in such a manner that electronic means, i.e. by mobile telephone and computer notify the workers notified of their work assignments schedule for a particular period in time. Customers, sales persons, planning managers or others place work assignments directly into a work assignment booking system. The work assignment booking system then distributes and schedules the work assignments into the workers schedules.

An example of such a system is described in patent publication WO0063819.
This publication describes how work assignments are received in the described system, examined, placed in queues and scheduled into workers schedules for a mobile. The system takes job requirements and location into account when allocating the work assignments to the workers.

One problem with systems of the state of the art is that workers have no control over the work assignment selection allocated to the workers by the system according to fixed rules.

Another problem with systems as described is that workers have no control over the selection of work assignments, which are selected for them.

Another problem with systems as described is that workers have no control over their schedule. The schedules are filled by the system and assigned to the workers.

Another problem with systems as described is that systems according the state of the art lack means for checking completeness of work assignments by the worker before scheduling.

Another problem with systems as described is that availability of other resources is not taken into account while planning.

### Summary of the invention

A system and method is provided for booking work for allocating work assignments to a worker. In known systems and methods work assignments are scheduled for the workers automatically. Workers cannot pick work assignments themselves.
According to an aspect of the invention workers may via a worker interface select work assignments using a search engine from a work assignments pool that are free or are already booked by themselves and book and schedule them into their own schedule.
In further embodiments of the invention the selection of work assignments is improved by providing means to select according to a worker profile, e.g. geographical region or skill level.

It is a first object of the invention to provide a system that provides workers remote access to bookable work assignments and enable them to book work assignments excluding other workers from booking the same work assignments.

The invention in another aspect also relates to a system for booking work assignments comprising
- at least one server connected to a network
- a work assignment database stored in at least one of said servers connected to the network
- at least one customer interface for entering work assignments connected to the network
- at least one worker interface connected to the network providing means, including a logon identity, to log a worker on to the system,
- work assignment records stored in the work assignments database, comprising at least a field indicating booking status,
- the booking status field comprising at least a value indicating a booked status.

Named first object of the invention can for example be achieved according to claim 1 of the invention, having the advantage of providing the possibility for a worker to select from work assignments that are available for booking, giving the worker control over his own workload. A worker is made independent and is enabled to perform his work in an autonomous way. This way of working stimulates and motivates workers.

It is an object of a first embodiment of the invention to provide a system that allows workers to select work assignments, which match with the workers profile.

Named object of the first embodiment of the invention can for example be achieved according to claim 3 of the invention, having the advantage of easy selecting from the bookable work assignments taking into account a workers profile.

It is an object of a second embodiment of the invention to provide a system that allows workers to schedule selected work assignments in their personal schedule thereby marking the work assignment as booked.

Named object of the second embodiment of the invention can for example be achieved according to claim 19 of the invention, having the advantage of, the ease of storing work assignment data directly into a workers schedule at the command of a worker.

It is an object of a third embodiment of the invention to provide a system that checks specific user defined conditions, in the selected work assignments before scheduling.

Named object of the third embodiment of the invention can for example be achieved according to claim 22 of the invention, having the advantage of making the worker perform certain steps before finalising and booking a work assignment.

It is an object of a fourth embodiment of the invention to provide a system that checks and searches for availability of resources in the selected work assignments before scheduling.

Named object of the fourth embodiment of the invention can for example be achieved according to claim 24 of the invention, having the advantage of relieving the worker from the cumbersome task of manually matching different schedules.

It is further an object of the invention to provide a method for booking a work assignment.

Named further object can for example be achieved by a method according to claim 29 of the invention, having the advantage that the work assignment is booked by a worker, giving the worker control over his workload.

### Short description of figures

The following figures are merely meant to give examples of the invention.
Fig. 1 shows a network architecture according to a preferred embodiment of the invention.
Fig. 2 shows a process of entering and booking of work assignments according an embodiment of the invention.
Fig. 3 shows a datamodel for a work assignment database according an embodiment of the invention
Fig. 4 shows various status values for a work assignment record according an embodiment of the invention.
Fig. 5a up to 5c show examples of work assignment fields according an embodiment of the invention.
Fig. 6 shows an example of a menu for a worker according an embodiment of the invention.
Fig. 7 shows an example of a selection of work assignment records according an embodiment of the invention.
Fig. 8a and 8b show examples of forms according an embodiment of the invention where a worker may modify work assignment records.
Fig. 9 shows an example of a form according an embodiment of the invention with a selection of work assignment records and means to narrow or broaden the selection.
Fig. 10 shows an example of a form according an embodiment of the invention with a workers profile record.
Fig. 11 shows an example of a form according an embodiment of the invention with a desired execution date, time and duration of a work assignment record.
Fig. 12 shows a form according an embodiment of the invention with a workers schedule.

### Detailed description of preferred embodiments of the invention

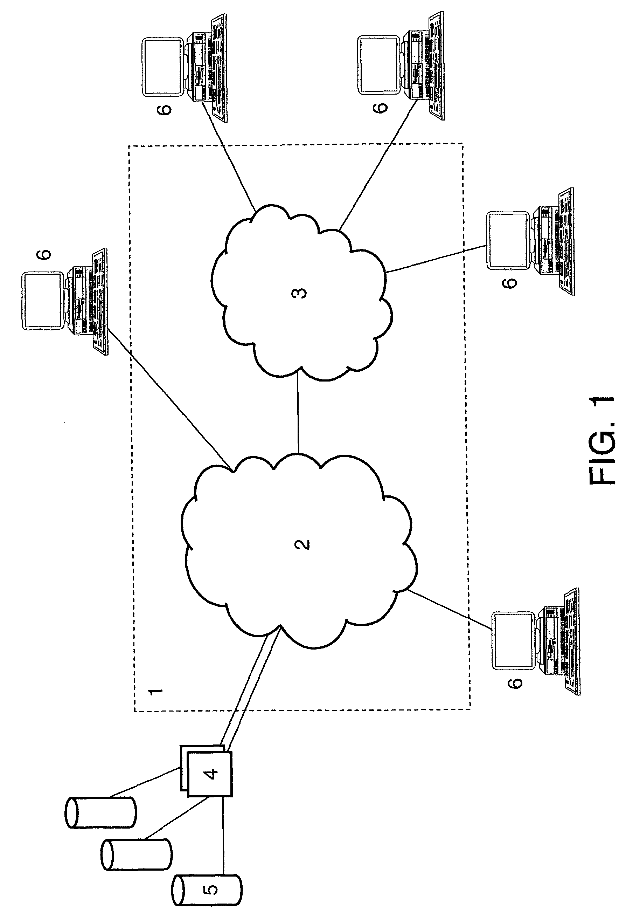

In fig. 1 is shown a preferred embodiment of the invention comprising at least one server (4) in a network (1). This at least one server comprises a processor with instructions in the form of at least one program, a random access memory, a storage memory and network communicating means.
On the at least one database server (4) a work assignment database (5) is stored including instructions for the processor to perform database functions, well known to a person skilled in the art.
The work assignment database (5) comprises data and instructions. The database has data stored in interrelated tables. Such databases are known as relational databases. The instructions comprise all functions necessary to manage, manipulate and display the data. These instructions are loadable into the database server memory and executable by the database server processor.
The network, may comprise a packet switched network (2) like the Internet, which may communicate with a circuit switched network (3), a telephone network for fixed subscribers like PSTN, or a telephone network for mobile subscribers like but not limited to a GSM, cellular, GPRS or 3rd generation mobile network.

The packet switched network (2) may also be a company LAN or WAN or any other network providing communication for computers. Various network operating systems may apply. Workers may communicate with the telephone network (3) via a portable or fixed workstation. A user terminal (6), which may be a PC, like the database server (4) at least comprises a processor with instructions in the form of at least one program, a random access memory, a storage memory, a display means, means for entering data like a keyboard and network communicating means.
The user terminal (6) may also be a palmtop computer or any other handheld device for data communication enabling a user to communicate with a data network (1) and display and enter or modify information. Any communication may be through either fixed or wireless communication means.

In a preferred embodiment, the at least one database server (4) is programmed to function as a webserver via which a worker may gain contact to the work assignment database (5) using his user terminal (6) which is programmed to function as a web browser.
Web browsers are also known for mobile or cellular telephones. Communication via webserver and browser is well known in company Intranets. This way the worker may contact the work assignment database (5).

The database server (4) is arranged to provide functions to make the worker log on to the work assignment database (5). A worker is prompted by the database server (4) to enter a logon identity (8) in the form of a user name, which is verifiable with a password. Such method of logging on to a system or database is well known to a person skilled in the art. Other forms of logging on to a database may also be applicable, as long as a worker logs on using a unique identity, identifying the worker only.

In an embodiment of the invention, another way of communicating with a database is known as the client-server method, whereby a database installed on a database server communicates with a user via client software on the user terminal (6). In other words, the user terminal (6) is programmed to function as a database client. This means that the user terminal (6) performs or executes database instructions like displaying forms with data, modifying data, reading and writing data to and from the database on the database server. This method particularly applies to smaller company LANs where no intranet is available.

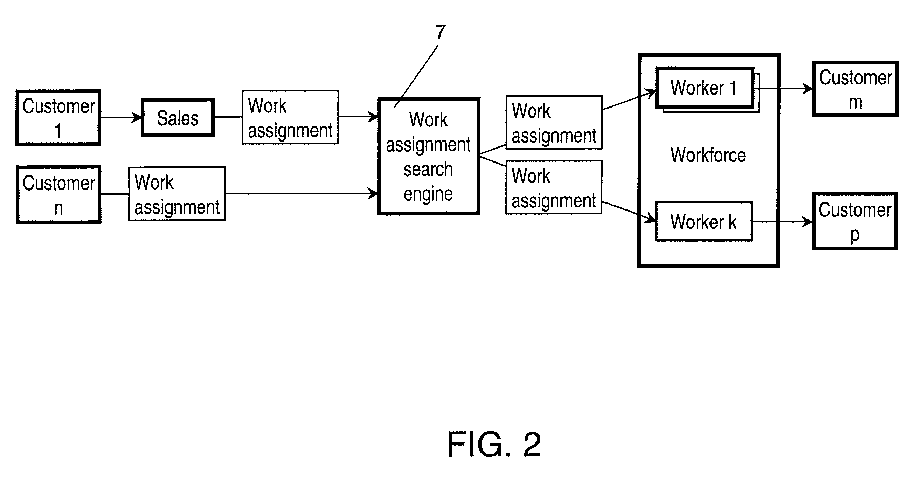

Fig. 2 shows a process according to another preferred embodiment of the invention by which customers or salespersons or workers enter work assignments. These work assignments are selected for a worker by means of a work assignments search engine (7). This search engine (7) may be a query by which the database server (4) searches records in a work assignment table (13) in a work assignment database according search conditions. The work assignment status and the logged on worker identity define the search conditions for the search engine. According to a preferred embodiment the invention the search engine is accessible via the worker interface only.

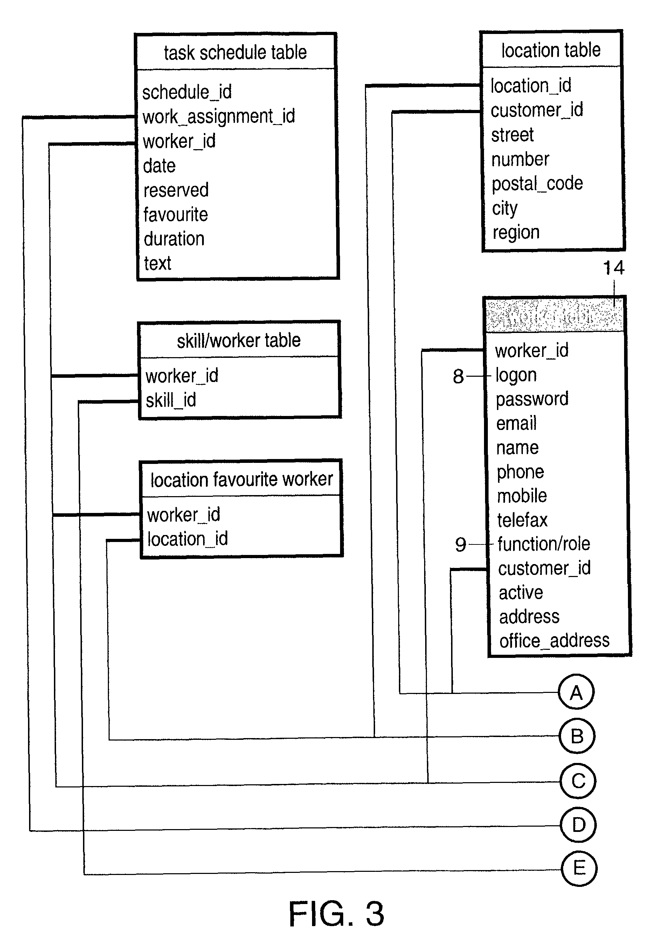

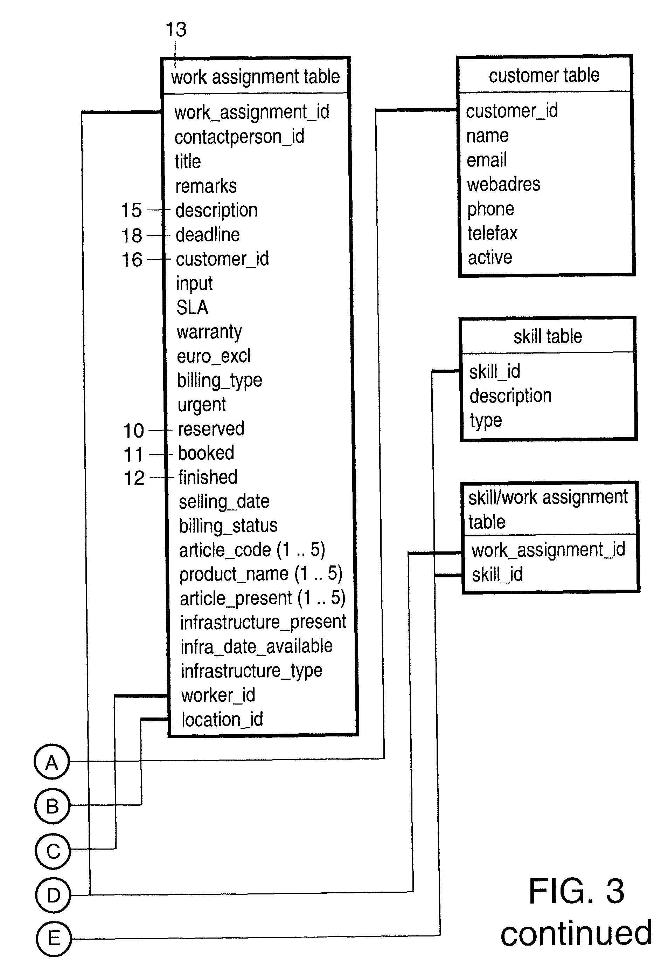

Fig. 3 shows an example of a datamodel of the work assignment database (5) according an embodiment of the invention.
The work assignment database (5) may be an Oracle ™ database, but also other database management systems may apply. The work assignment database may be of a relational type. The work assignment database (5) has various tables at least comprising a work assignment table (13). The work assignment table (13) comprising at least a field (11) indicating the status of a work assignment and also comprising fields describing the work assignment (15), the customer (16), the location (17), execution time and date (18).
Work assignment records with data for work assignments, may be created by customers or salespersons or workers.

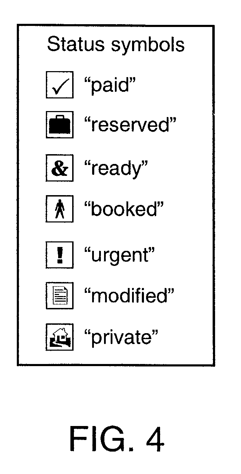

Fig.4 shows the work assignment status field according to a preferred embodiment of the invention which may indicate a "paid", "reserved", "booked", "ready", "urgent", "modified" or "private" status. A work assignment, which is still free, is in a preferred embodiment of the invention indicated by an empty status field, but a specific value indicating "free" may apply. Other status indications for other states may also apply. In an embodiment according the invention the status may be built up by several Boolean fields, e.g. one indicating reserved (10), another indicating booked (11) and yet another indicating finished (12) status.
According an embodiment of the invention, the database server (4) is arranged to present data in forms. On these forms there may be boxes where a user may view, enter or alter data from the work assignment database (5). The forms available for a worker, including the data presented by them, constitute a worker interface. There may also be means, usually in the form of buttons, to perform actions like opening a new form or writing data from the currently open form into an underlying record in a table in the work assignment database (5). The forms as described are displayed to a user in a user interface via a web browser or via said work assignment database client on the client's terminal. The use of forms, buttons, links and data fields is common knowledge for a person skilled in the art.
In a preferred embodiment of the invention, a worker is provided with a link or URL to a specific form in the work assignment database where the worker is prompted to log on. This way it is ensured that a worker has access to data and functions that belong to a worker only.

In another embodiment of the invention, the database server (4) is arranged to identify a logged on user as a worker by the log on identity (8) and has a method enabling access only to forms and data accessible for workers. There may be other user roles as well, each type having its own set of forms and data. Examples of other user roles are "customer", or "salesperson" or "manager".
The database server (4) is arranged to provide a form to a user on the user interface according his role. When a user logs on to the database, the database server checks his log on identity (8) and picks the role (9) from a field in a role table. According the role of the user, the user is presented with a form including data and functions that fit his role.

In another embodiment of the invention, the database forms have labels indicating which logged on users are authorised to use or open said forms, thereby ensuring that a worker has access to those forms that are typical for his role or function.

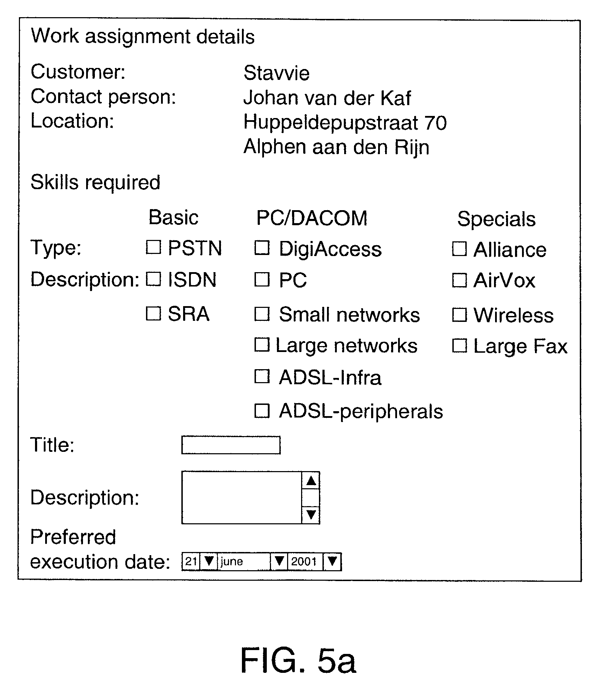

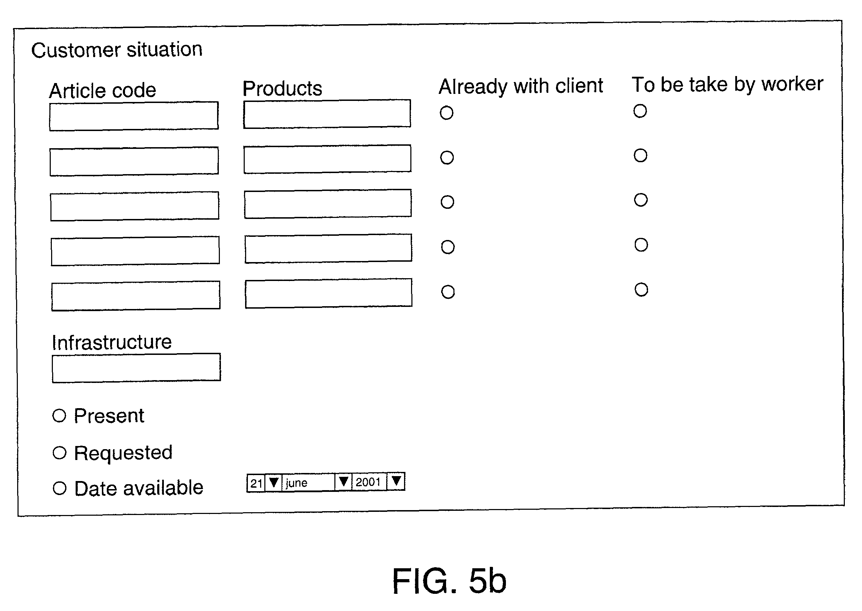

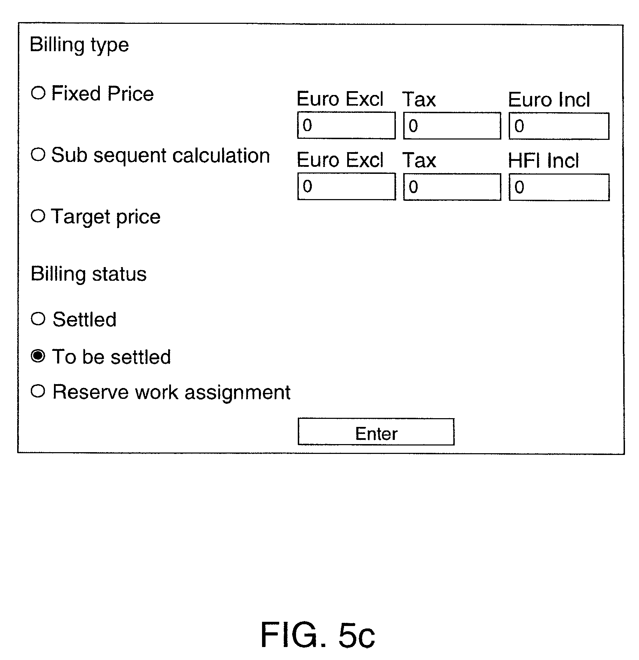

Figures 5a to 5c show examples of forms presenting work assignment data, which may be stored in a work assignment record. The items on the forms correspond to various fields in the work assignment table. The content of the various items corresponds to values stored in a work assignment table record.

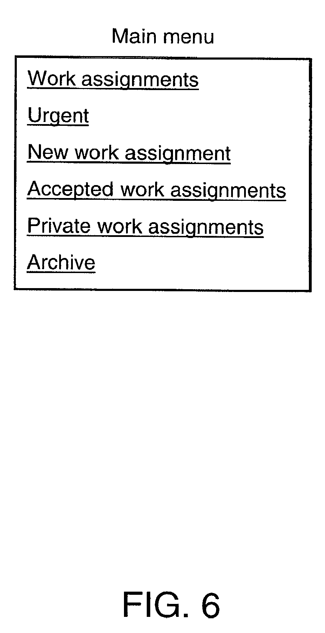

In fig. 6 an example is given of a form which appears for a worker after logging on to the work assignment database (5) according to a preferred embodiment of the invention, comprising a typical menu from which a worker may select further forms. On this form may be buttons as an active graphical items or hyperlinks or other means by which further forms are opened.

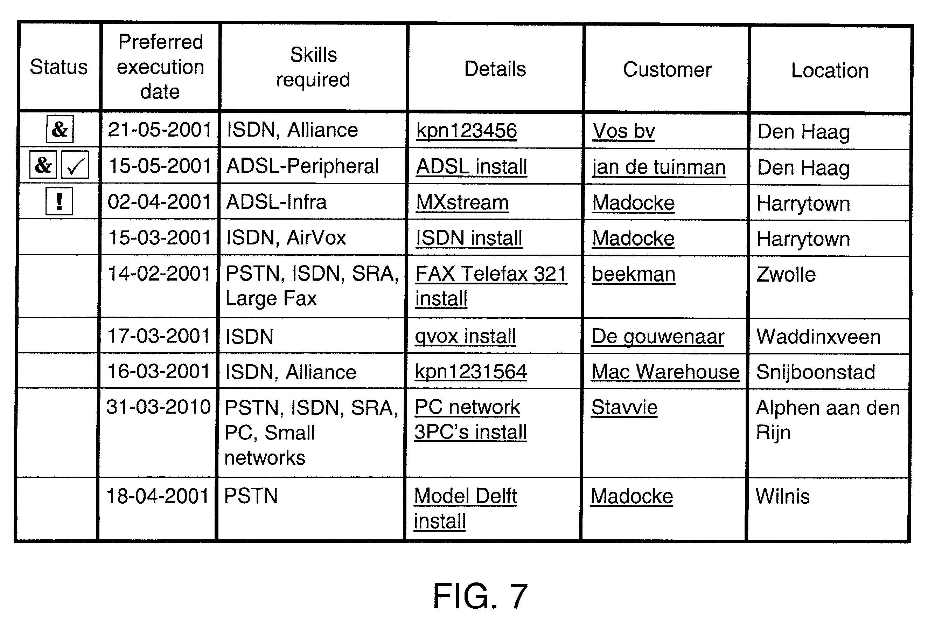

Fig. 7 shows a form according to a preferred embodiment of the invention, presenting a selection of work assignments comprising "free", "reserved", "urgent" and "paid" work assignments. The "urgent" and "paid" status includes the "booked" status. An empty status field indicates the "free" status.

In order to facilitate selection of work assignments by a worker, the work assignment database (5) comprises a table holding workers profiles (fig. 2 item 8). Workers profile records are identifiable by the workers log on identity. When a worker is logged on to the work assignment database (5), the database server (4) fetches the profile of the worker by his log on identity.
A worker profile record has fields corresponding to fields in a work assignment record which may be used for matching. The database server (4) is programmed to compare fields in records from different tables. Given a first record from a first table, a new recordset of a second table may be created with records having matching fields with the first record from the first table.
In the case of the invention given a record from the workers profile table, a recordset of work assignment records from the work assignment table (13) having matching fields with the workers profile may be created.
Such corresponding matching fields may indicate a graphical region.
Such corresponding matching fields may indicate a skill level required to perform a particular work assignment.
Such corresponding matching fields may indicate a customer category.
Other corresponding matching fields with different meanings may apply.

A corresponding matching field may be of an ordinal character. This way values in this field may be ranked, e.g. from smaller to greater. An example of geographical corresponding matching fields values may be "broadway", "manhattan", "new york city", "new york state", "usa".

The database server (4) is arranged to provide a selection form with work assignment records selected on the basis of corresponding matching fields of the workers profile of the logged on worker.
The selection form has means to increase or decrease the value of a corresponding matching field workers profile used for matching work assignment records. A worker is thereby enabled to broaden or narrow the selection visible to him. For example when the geographical region where the worker normally works is "manhattan" according his workers profile, work assignments may be selected which have addresses in that area. The worker may broaden his search to "new york city", if the first selection holds too few work assignments for him to pick.

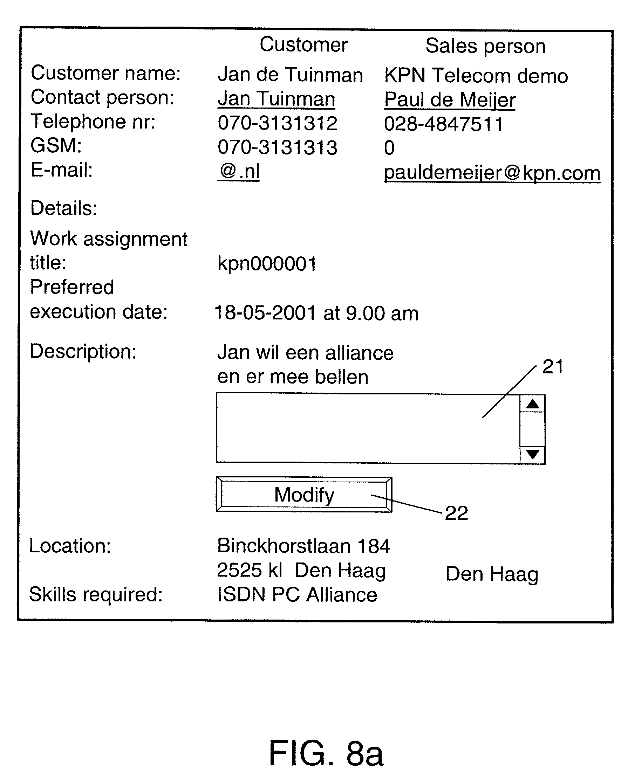

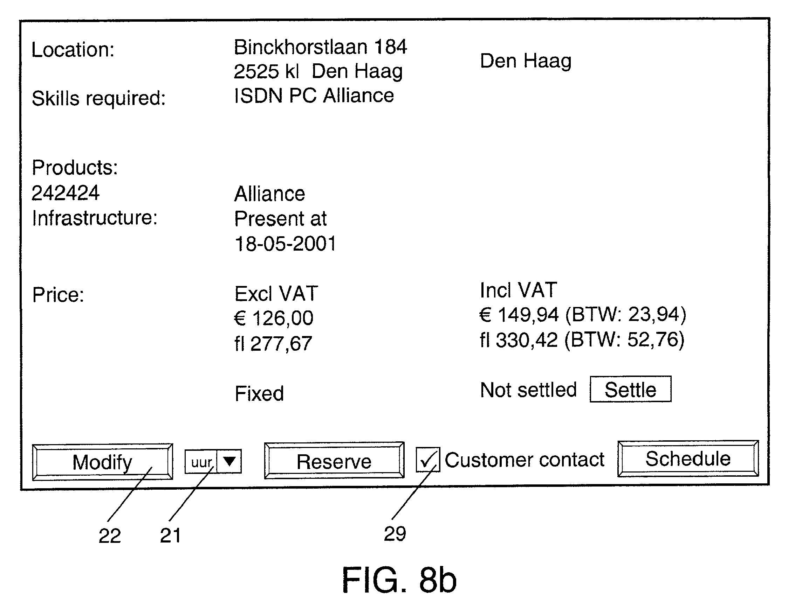

Fig. 8a and 8b show forms with work assignment data fields (21) which may be modified by a worker. In a preferred embodiment of the invention, only a limited number of fields are modifiable by a worker, but solutions are possible where no data is modifiable except the status, or where all fields are modifiable. Modification is initiated by clicking a button (22) on said forms.

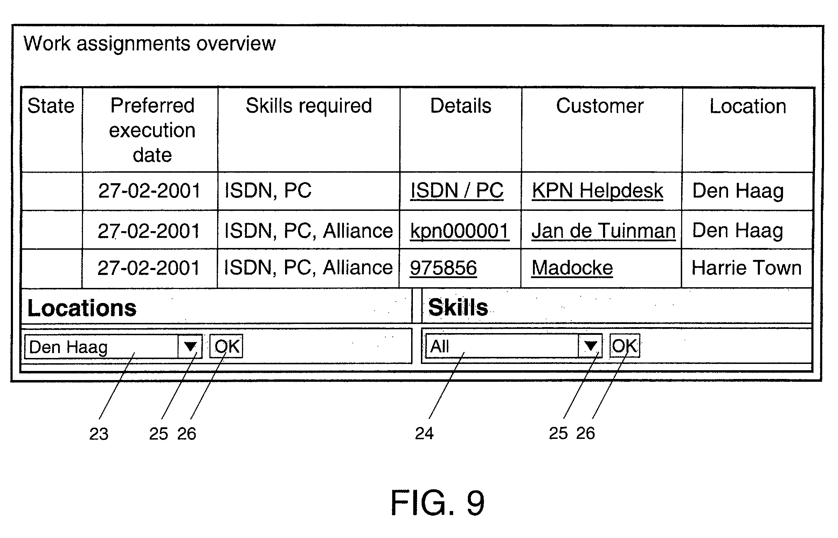

Fig.9 shows an example of a selection form according to a preferred embodiment of the invention. Field (23) is showing geographical area and field (24) skill level as selection criteria. Selecting a different value from a list using buttons (25) may modify the values in the selection fields. Selecting is initiated by buttons (26).
The database server (4) is arranged to provide for execution instructions such that work assignment records are selected where the corresponding matching field of the work assignment records are ranked lower than the corresponding matching field of the workers profile record. This would be the case in a preferred embodiment of the invention.
The database server (4) is arranged to provide for execution instructions such that work assignment records are selected where the corresponding matching field of the work assignment records are ranked equal to the corresponding matching field of the workers profile record. This would also be the case in a preferred embodiment of the invention.
The database server (4) is arranged to provide for execution instructions such that work assignment records are selected where the corresponding matching field of the work assignment records are ranked greater than the corresponding matching field of the workers profile record. This would be the case in a another embodiment of the invention.
Another possibility for the corresponding matching fields is that they are of Boolean nature. When the fields match according to a first Boolean function which yields a "true" result, in the preferred embodiment a Boolean "and", or any Boolean function, work assignment records may be selected. When more than one corresponding matching fields of Boolean nature are used, the results of the Boolean functions of the various corresponding matching fields may be combined in a second Boolean function. In a preferred embodiment this would also be an "and" function. In this embodiment, the Boolean values of the logged on workers profile record would appear in a selection form, a field for example indicating a particular skill. This could be for example "ISDN", meaning that the logged on worker has ISDN skills. Work assignment records then will be selected with the ISDN corresponding matching field marked as true.
Another approach of using corresponding matching fields is by enabling the fields on a form. Those fields that are enabled will be combined using an "and" function between the corresponding matching fields of the logged on workers profile database record and the corresponding matching fields of the work assignment records. The Boolean outcomes of which will be combined with an "and" function with means indicating the enabling of a particular corresponding matching field. The means for enabling could be checkboxes on a form indicating the names of corresponding matching fields.

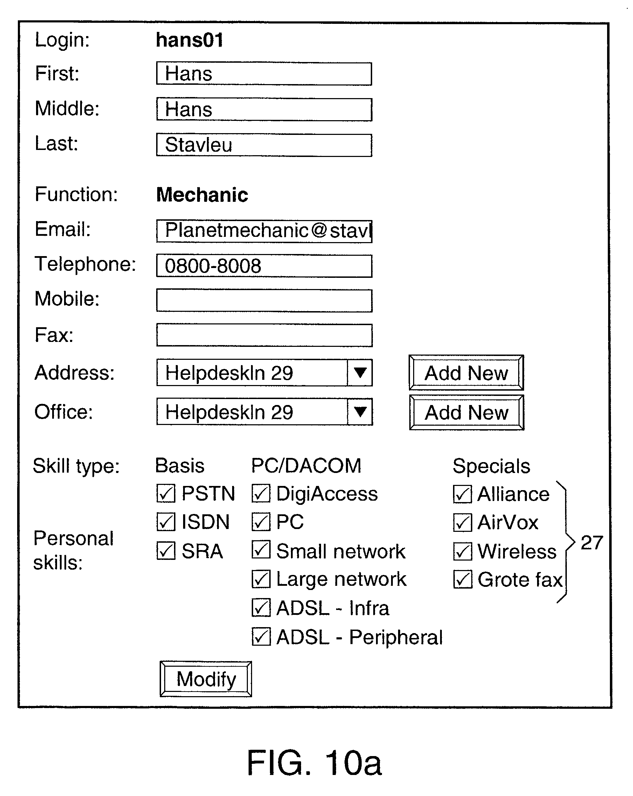

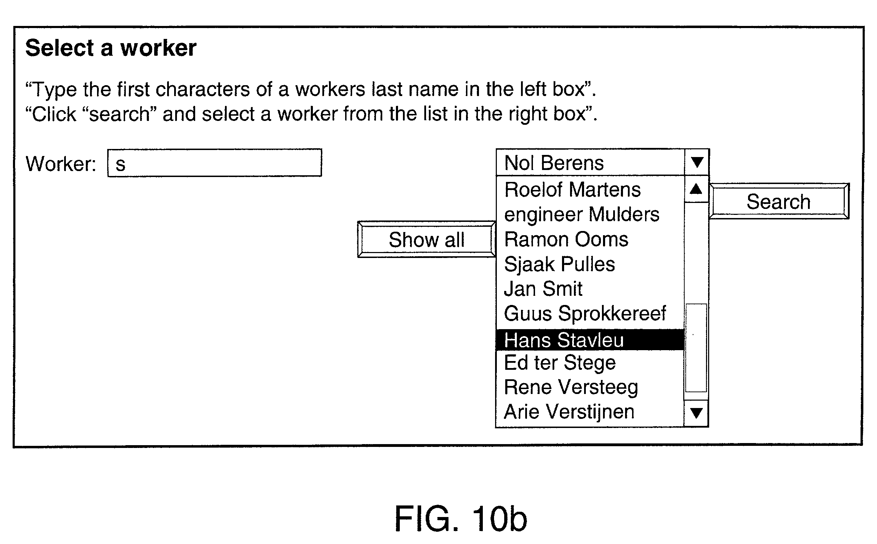

Fig. 10 shows a record from the workers profile table according to a preferred embodiment of the invention wherein skill level is itemised in Boolean fields. These fields are logically matched with fields in the work assignment table.

A work assignment table (13) comprises at least one field indicating the work assignment execution date and time. One such field may indicate the execution date and time preferred by the customer, whereas another field may indicate the final execution date and time, set by the worker after negotiation with the customer. The database server (4) is arranged to provide for execution instructions allowing these data to be set or altered.
A work assignment table (13) comprises at least one field indicating the work assignment duration, once execution has started. One such field may indicate the estimated duration preferred by the customer, whereas another field may indicate the final duration, set by the worker after negotiation with the customer. The database server (4) is arranged to provide for execution instructions allowing these data to be set or altered.
A work assignment table (13) comprises at least one field indicating the work assignment finishing date and time. One such field may indicate the finishing date and time preferred by the customer, whereas another field may indicate the final finishing date and time, set by the worker after negotiation with the customer. The database server (4) is arranged to provide for execution instructions allowing these data to be set or altered.

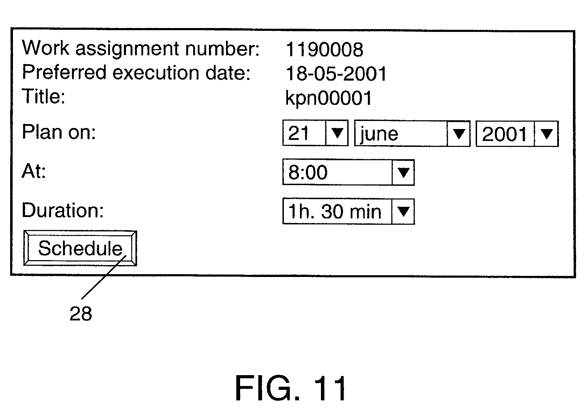

Fig. 11 shows a form according to a preferred embodiment of the invention, comprising a work assignment number, desired date, time and duration, which may be changed by the logged on worker after consultation with the customer.
Like the workers profiles, there is a table in the work assignment database (5) holding a schedule for each worker, comprising fields for work assignment identification, worker log on identity, execution time and date and duration or alternatively the finishing date and time of a work assignment. There may also be a linked table from well-known computer programs like Microsoft Outlook™.

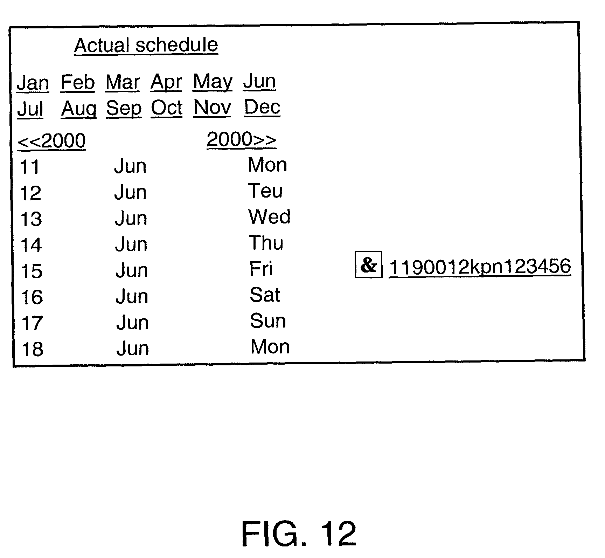

Fig. 12 shows a logged on workers schedule.
After selecting and completing a work assignment record the database server (4) is arranged to provide a function by which the work assignment scheduling data may be copied to the workers schedule. Such a function comprising the copying of scheduling data from the work assignment execution record to corresponding fields in a new record in a workers schedule, may be provided, in a preferred embodiment according the invention, on a form where these data are visible. In this or another embodiment this function may be started by clicking a button, fig. 11 item 28, provided on said form.

In another embodiment according the invention the database server (4) may be arranged to provide a condition which has to be true before the work assignment status field may be set to a value indicating booked.
Said function sets the booking field accordingly, having a checking function for such a condition.
Said condition may in another embodiment according the invention a checkbox which when marked yields a true value and such enabling the booking of a work assignment.
An example of a checkbox is shown in fig. 8b item 29, where the system allows the user to indicate that consultation with the customer has taken place.

The work assignment database (5) may hold or be linked to scheduled resources. The database server (4) may in a further embodiment according to the invention be arranged to provide for a function which checks the availability of a resource on the execution date and time or duration or the period until finishing a work assignment. Said function searches for booked events in the schedule of said resource. If a scheduled event is found, than the condition to book is set to false.
In a yet further embodiment according the invention, a function may be provided that searches through the resources schedule for a free space if the work assignment execution date and time and duration or finishing do not match with the resources schedule. The work assignment execution data may be altered by means of fields on a form.
A logged on worker, needed to execute the work assignment, may be considered to be a resource, according to a further embodiment according the invention. His schedule is already referred to.
A location, needed to execute the work assignment, may be scheduled and its schedule may be available to the work assignment database (5), according to a further embodiment according the invention.
A tool, needed to execute the work assignment, may be scheduled and its schedule may be available to the work assignment database (5), according to a further embodiment according the invention.
A toolkit, needed to execute the work assignment, may be scheduled and its schedule may be available to the work assignment database (5), according to a further embodiment according the invention.
A part, needed to execute the work assignment, may be scheduled and its schedule may be available to the work assignment database (5), according to a further embodiment according the invention.
A vehicle, needed to execute the work assignment or to reach the location work the work is conducted, may be scheduled and its schedule may be available to the work assignment database (5), according to a further embodiment according the invention.
A co-worker, needed to execute the work assignment, may be scheduled and its schedule may be available to the work assignment database (5), according to a further embodiment according the invention.
A further embodiment according the invention provides a customer interface where a customer or a salesperson may identify himself by logging on to the work assignment database (5). He may also enter himself as a new customer. He may enter or change customer data like name, address, etc. The database server (4) may be arranged to provide said customer with means for entering work assignment records into the work assignment table (13), the means comprising a form with fields where he can specify work assignment specific data like work assignment description, work assignment execution date and time, duration or finishing date and time, required skill level, location, customer type and other data.
The work assignment records, to which said worker has access, may be modified by that worker. The work assignment status is set to reserved. This prevents the work assignment being selected and modified or booked by another worker. The database server (4) provides a form to modify fields in a work assignment record for that purpose. The database server (4) now enables the worker to refine the data entered by the customer or salesperson. A worker may for instance get in touch with the customer and discuss the work assignment details. At this time the customer may now indicate to the worker further requirements he did not know at the time he entered the work assignment into the work assignment table (13).

## Claims

1. A system for booking work assignments comprising
• at least one user terminal (6) to provide a worker interface to log a worker on to the system with a logon identity (8),
• a work assignment database (5) accessible via the worker interface, comprising a work assignment table (13), which comprises at least a field indicating booking status, which comprises at least a value indicating a booked status and a field indicating the logon identity (8) of the worker who marked the work assignment as booked,
• said system further being arranged to provide a logged on worker via the worker interface a function for marking a work assignment record as booked.

2. The system of claim 1 further comprising at least one database server (4) connected to a network and wherein the user terminal (6) is arranged to communicate with the network (1), and wherein a work assignment database is stored in said at least one database server (4) connected to the network and wherein the database server (4) is being arranged to provide a logged worker via the worker interface a search engine (7) to give access to a set of work assignment records which are a combination of records that are not booked and records that are booked by the logged on worker, and a function for marking a work assignment record as booked.

3. The system of claim land 2, wherein the worker interface comprises a set of inter linked database forms which are web accessible via hyperlinks and where one hyperlink gives a first access to a worker.

4. The system of claims 1 - 2 and 3, comprising a workers profiles table stored in said work assignment database (5) wherein a workers profile is identifiable with a workers logon identity (8).

5. The system of claim 2 and 3, wherein work assignment records and workers profile records comprise at least one corresponding matching field.

6. The system of claim 5, wherein the at least one corresponding matching field comprises a field indicating geographical region.

7. The system of claims 5 - 6, wherein the at least one corresponding matching field comprises a field indicating skill level.

8. The system of claims 5 - 7, wherein the at least one corresponding matching field comprises a field indicating customers category.

9. The system of claim 5 - 8, wherein the at least one corresponding matching field is of ordinal character.

10. The system of claim 9, arranged to provide a first function for selecting work assignments wherein the at least one corresponding matching field of a work assignment table record is ranked to a comparison value equal to the at least one corresponding matching field of the logged on workers profile database record.

11. The system of claim 10 , arranged to provide means to increase or decrease the comparison value.

12. The system of claims 10 - 11, wherein the nature of the ranking is at least one or a combination of "lower or less than", "equal" and "greater or more than".

13. The system of claims 5 - 12, wherein the matching fields are of Boolean character .

14. The system of claim 5 - 13, arranged to provide a second function for selecting work assignments wherein the at least one corresponding matching field of a work assignment table record is logically compared to the at least one corresponding matching field of the logged on workers profile database record.

15. The system of claim 14, arranged to provide means to logically enable matching fields .

16. The system of claims 1 - 15, wherein said work assignment table (13) comprises at least a field indicating a work assignment execution date and time.

17. The system of claims 1 - 16, wherein said comprises at least a field indicating a work assignment duration.

18. The system of claims 1 - 17, wherein said work assignment table (13) comprises at least a field indicating a work assignment finishing date and time.

19. The system of claim 1 - 18, comprising a workers schedule database stored in the at least one database server (4) connected to the network (1), wherein a workers schedule is identifiable with a workers logon identity (8).

20. The system of claim 19, arranged to provide a first function to copy work assignment start date and time into the logged on workers schedule.

21. The system of claims 19 - 20, arranged to provide a second function to copy work assignment execution duration into the logged on workers schedule.

22. The system of claims 19 - 21, arranged to provide a third function to copy work assignment finishing date and time into the logged on workers schedule.

23. The system of claim 1 - 22, arranged to provide a work assignment record markable as booked under a predefined condition.

24. The system of claim 23, arranged to provide at least one checkbox which when marked provides the predefined condition.

25. The system of claim 23 - 24, wherein the predefined condition is the availability at the date of the work assignment of at least one resource indicated in a resource schedule.

26. The system of claim 25, arranged to provide a search function for free space in the schedule of at least one resource.

27. The system of claims 25 - 26, wherein the resource comprises at least one of the logged on worker, a location, a tool, a toolkit, a part, a vehicle and a co-worker.

28. The system of claims 1 - 27, arranged to provide at least one customer interface for entering work assignments connected to the network.

29. The system of claims 1 - 28, providing work assignment records via the workers interface which are modifiable by a logged on worker.

30. A method for booking work assignments, comprising the following steps:
• providing a worker access to a work assignment database (5) via a worker interface,
• logging a worker on to the work assignment database (5),
• providing a menu,
• selecting work assignments records from a work assignment table where the status is free or where the status is booked and the work assignment is booked by the logged on worker,
• providing a form displaying the selected work assignments from which a single work assignment record may be picked
• providing a form displaying the selected single work assignment record
• providing booking means on the form by which the status field of the single work assignment record may be set to a value indicating a booked status and by which the worker field of the work assignment record may be set to a value indicating the logged on worker.

31. The method of claim 30, providing means to select work assignments according geographical region.

32. The method of claims 30 - 31, providing means to select work assignments according skill level.

33. The method of claims 30 - 32, providing means for booking work assignment desired date, time and duration or finishing time in a logged on workers schedule.
